# EUROPÄISCHE PATENTSCHRIFT

(11) **EP 2 307 881 B1**
(45) Veröffentlichungstag und Bekanntmachung des Hinweises auf die Patenterteilung: **21.08.2013**
(21) Anmeldenummer: 09772218.5
(22) Anmeldetag: 04.05.2009
(51) Int. Cl.: G01N 27/414

(54) **Nach dem Flip-Chip-Verfahren hergestellter Gassensor**
Gas sensor, produced by flip-chip method
Détecteur de gaz, fabriqué par procédé à puce retournée

(30) Priorität: 04.07.2008 DE 102008040187
(43) Veröffentlichungstag der Anmeldung: 13.04.2011
(73) Patentinhaber: Robert Bosch GmbH, 70442 Stuttgart (DE)
(72) Erfinder: HENNECK, Stefan, 71229 Leonberg (DE); SCHMIDT, Ralf, 70839 Gerlingen (DE)
(86) Internationale Anmeldenummer: PCT/EP2009/055343
(87) Internationale Veröffentlichungsnummer: WO 2010/000518

(56) Entgegenhaltungen:
- EP-A- 1 707 952
- WO-A-98/27411
- DE-A1- 19 814 857
- FLEISCHER M ET AL: "Low-power gas sensors based on work-function measurement in low-cost hybrid flip-chip technology" SENSORS AND ACTUATORS B (CHEMICAL) ELSEVIER SWITZERLAND, Bd. B80, Nr. 3, 1. Dezember 2001 (2001-12-01), Seiten 169-173, XP004311804 ISSN: 0925-4005

## Beschreibung

### Stand der Technik

Die Erfindung geht aus von einem Sensorelement, umfassend mindestens ein Halbleiterbauelement mit einer gassensitiven Schicht, gemäß dem Oberbegriff des Anspruchs 1. Weiterhin betrifft die Erfindung dessen Verwendung.

Sensorelemente, die mindestens ein Halbleiterbauelement mit einer gassensitiven Schicht umfassen, werden im Allgemeinen zur Detektion von Komponenten in einem Gasgemisch eingesetzt. Halbleiterbauelemente mit einer gassensitiven Schicht sind dabei im Allgemeinen gassensitive Feldeffekttransistoren. Bei solchen gassensitiven Feldeffekttransistoren ist die Gate-Elektrode mit einer Beschichtung versehen, auf der Gasmoleküle adsorbieren können und damit über die Ladungsträgerdichte die Kennlinie des Transistors ändern. Dies ist ein Signal für die Anwesenheit des jeweiligen Gases. Als Beschichtung wird dabei jeweils ein Material gewählt, das selektiv für bestimmte zu detektierende Gase ist. Hierzu enthält die Beschichtung im Allgemeinen ein katalytisch aktives Material. Durch den Einsatz unterschiedlicher gassensitiver Feldeffekttransistoren, die jeweils spezifische Gate-Beschichtungen aufweisen, können unterschiedliche Gase detektiert werden.

Sensorelemente zur Detektion von Gaskomponenten können zum Beispiel auch in Abgassträngen von Kraftfahrzeugen eingesetzt werden. Mit solchen Sensorelementen kann zum Beispiel die Anwesenheit von Stickoxiden, Ammoniak oder Kohlenwasserstoffen im Abgas ermittelt werden. Aufgrund der hohen Temperaturen des Abgases der Verbrennungskraftmaschine werden jedoch hohe Anforderungen an die Sensorelemente gestellt. Zudem können im Abgas Partikel enthalten sein, die zu einer Abrasion der Gate-Beschichtungen führen können. Dies macht einen Schutz der Gate-Beschichtungen erforderlich, wobei jedoch die Funktion durch einen solchen Schutz nicht beeinträchtigt werden darf.

Aus der WO 98/27411 ist ein Verfahren zum Aufbringen eines Mikrosystems oder Wandlers auf ein Substrat bekannt. In dem Substrat wird eine Durchlassstelle erzeugt. Auf einer Seite eines Halbleiterelementes ist eine sensitive Teilfläche vorgesehen. Das Halbleiterelement ist auf einem Substrat mittels einer Flip-Chip-Technologie befestigt.

Aus der DE 19814857 A1 ist ein Gassensor nach dem Prinzip der Austrittsarbeitsmessung bekannt, bei dem ein CMOS-Transistor verwendet wird. Eine gassensitive Schicht ist Bestandteil der Gate-Isolierung. Der Transistor ist auf einer Leiterplatte montiert und entsprechend mit Leiterbahnen kontaktiert. Für den Einsatz in rauen Umgebungsbedingungen kann der Aufbau mit einer Vergussmasse teilweise oder vollständig umhüllt werden.

Ein gassensitiver Feldeffekttransistor mit einer offenporig porösen sensitiven Schicht ist zum Beispiel in DE-A 10 2005 008 051 beschrieben.

### Offenbarung der Erfindung

### Vorteile der Erfindung

Ein erfindungsgemäß ausgebildetes Sensorelement umfasst mindestens ein Halbleiterbauelement mit einer gassensitiven Schicht, das nach dem FlipChip-Verfahren auf einem Träger befestigt ist, wobei die gassensitive Schicht in Richtung des Trägers weist und Mittel umfasst sind, um der gassensitiven Schicht ein zu untersuchendes Gas zuzuführen. Das Halbleiterbauelement ist von einer Ummantelung umschlossen.

Durch das Befestigen des Halbleiterbauelementes nach dem FlipChip-Verfahren und der anschließenden Ummantelung wird das Halbleiterbauelement gegen äußere Einwirkungen geschützt. So wird zum einen ein Schutz der gassensitiven Schicht bereits dadurch erzielt, dass diese zum Träger hin weist und nicht vom Träger weg zur Umgebung. Durch die zusätzliche Ummantelung wird weiterhin sichergestellt, dass keine schädlichen Bestandteile im umgebenden Medium mit dem Halbleiterbauelement wechselwirken können. Auf diese Weise kann einer Schädigung des Halbleiterbauelements wirksam vorgebeugt werden.

Um der gassensitiven Schicht das zu untersuchende Gas zuführen zu können, umfassen die Mittel für die Gaszufuhr eine poröse Schicht, die zwischen dem Halbleiterbauelement und dem Träger angeordnet ist, wobei ein Bereich der porösen Schicht nicht von der Ummantelung abgedeckt ist. Durch den nicht von der Ummantelung abgedeckten Bereich der porösen Schicht kann das zu untersuchende Gas in die poröse Schicht eindringen. Durch die poröse Schicht wird das zu untersuchende Gas zur gassensitiven Schicht geleitet. Durch den Einsatz einer porösen Schicht wird vermieden, dass nicht gasförmige Bestandteile des zu untersuchenden Gases, beispielsweise im Gas enthaltene Partikel, an die gassensitive Schicht gelangen. Auf diese Weise wirkt die poröse Schicht als zusätzliche Schutzschicht für die gassensitive Schicht.

Die poröse Schicht enthält vorzugsweise eine offen poröse Keramik. Bevorzugte offen poröse Keramiken, die in der porösen Schicht enthalten sind, sind Aluminiumoxid, Zirkonoxid, Cordierit und Mischungen daraus.

Die poröse Schicht wird vorzugsweise vor dem Befestigen des Halbleiterbauelements auf den Träger aufgebracht. An den Positionen, an denen der Träger mit dem Halbleiterbauelement kontaktiert wird, werden in der porösen Schicht Aussparungen vorgesehen. Alternativ ist es auch möglich, zum Beispiel Durchkontaktierungen in die poröse Schicht einzubringen. Das Aufbringen der porösen Schicht erfolgt zum Beispiel durch ein Siebdruckverfahren, dem im Allgemeinen ein Sinterschritt nachgeschaltet ist. Die poröse Schicht kann jedoch auch zum Beispiel durch ein Plasmaspritzverfahren, Rakeln, Dispensen oder Tampondruck aufgebracht werden. Bevorzugt wird die poröse Schicht jedoch durch ein Siebdruckverfahren aufgebracht, wobei sich zum Beispiel durch Einsatz von Porenbildnern die Porosität der porösen Schicht einstellen lässt. Auch ermöglicht ein Siebdruckverfahren eine zielgenaue Orientierung der porösen Schicht. Mit dem Siebdruckverfahren lässt sich auf einfache Weise eine planare Oberfläche erzielen.

Damit das gegebenenfalls das Halbleiterbauelement schädigende Bestandteile enthaltende zu untersuchende Gas nur Kontakt mit der gassensitiven Schicht bekommt, ist es möglich, bei Einsatz einer porösen Schicht zwischen dem Halbleiterbauelement und dem Träger oder einem Kanal im Träger, über den das Gas der gassensitiven Schicht zugeführt wird, die Ummantelung gasdicht auszuführen. Bei einer gasdichten Ausführung der Ummantelung werden insbesondere auch gasförmige Bestandteile des zu untersuchenden Gases vom Halbleiterbauelement ferngehalten.

Die Ummantelung, mit der das Halbleiterbauelement ummantelt ist, enthält vorzugsweise mindestens ein Material aus der Gruppe bestehend aus Aluminiumoxid, Zirkonoxid, Cordierit und Gläser. Bevorzugt ist die Ummantelung jedoch aus Aluminiumoxid, Zirkonoxid, Cordierit oder Mischungen aus diesen Materialien gefertigt.

Ein Verfahren zur Herstellung des Sensorelementes umfasst vorzugsweise folgende Schritte:
(a) Befestigen eines Halbleiterbauelements mit einer gassensitiven Schicht derart durch ein FlipChip-Verfahren auf einem Träger, dass die gassensitive Schicht in Richtung des Trägers weist und ein zu untersuchendes Gas zur gassensitiven Schicht zugeführt werden kann,
(b) Aufbringen der Ummantelung nach dem Befestigen des Halbleiterbauelements.

Bevorzugt wird die Ummantelung durch ein Plasmaspritzverfahren, insbesondere durch ein atmosphärisches Plasmaspritzverfahren aufgebracht. Durch das Aufbringen der Ummantelung mit dem Plasmaspritzverfahren ist eine gezielte Einstellung der Porosität der Ummantelung möglich. So kann die Ummantelung sowohl stark porös, weniger stark porös oder vollkommen gasundurchlässig hergestellt werden. Aufgrund der Befestigung des Halbleiterbauelements durch das FlipChip-Verfahren, bei dem die gassensitive Schicht in Richtung zum Träger weist, wird ein zusätzlicher Schutz der gassensitiven Schicht beim Aufbringen der Ummantelung erzielt. Auf diese Weise können die empfindlichen Strukturen der gassensitiven Schicht durch das Plasmaspritzverfahren nicht zerstört werden. Auch ist durch das Plasmaspritzverfahren ein gezielter Aufbau der Ummantelung möglich. So können zum Beispiel auch Gradienten, beispielsweise in der Porosität der Ummantelung, realisiert werden.

Ein Vorteil des atmosphärischen Plasmaspritzverfahrens ist insbesondere, dass im Allgemeinen keine abschließende Temperaturbehandlung erforderlich ist. Zudem kann die Applikation bei moderaten Temperaturen, d.h. bei Temperaturen im Bereich von 20 bis 300 °C erfolgen. Weiterhin lässt sich auch der thermische Ausdehnungskoeffizient der Ummantelung anpassen, zum Beispiel durch die Porosität oder Mischungsverhältnisse der für die Ummantelung eingesetzten Keramiken, und es können thermisch induzierte mechanische Spannungen vermieden werden.

Der Einsatz eines atmosphärischen Plasmaspritzverfahrens hat den weiteren Vorteil, dass die Beschichtungskammer, in der die Ummantelung aufgetragen wird, nicht evakuiert werden braucht. Dies ermöglicht einen schnelleren Durchsatz und damit eine Kostenreduktion.

Alternativ zum Aufbringen der Ummantelung durch ein Plasmaspritzverfahren ist auch ein beliebiges anderes, dem Fachmann bekanntes Auftragsverfahren möglich. So kann die Ummantelung insbesondere bei der Verwendung von Materialien für die Ummantelung, die nicht bei hohen Temperaturen gesintert werden müssen, oder bei temperaturstabilen Halbleiterbauelementen, zum Beispiel auch durch Dispensen oder Tampondruck aufgebracht werden.

Das Halbleiterbauelement mit der gassensitiven Schicht ist zum Beispiel ein chemosensitiver Feldeffekttransistor. Bei einem chemosensitiven Feldeffekttransistor ist die gassensitive Schicht im Allgemeinen die Gate-Elektrode. An der gassensitiven Schicht erfolgt zum Beispiel eine chemische Reaktion des zu detektierenden Gases, wodurch sich die Eigenschaft der gassensitiven Schicht, beispielsweise die elektrische Leitfähigkeit, ändert. Hierzu wird die gassensitive Schicht zum Beispiel aus einem porösen Halbleitermaterial gefertigt, das eine katalytisch aktive Beschichtung für das zu detektierende Gas enthält.

Ein erfindungsgemäßes Sensorelement kann zum Beispiel zur Bestimmung des Gehalts an Stickstoffoxiden, Ammoniak und/oder Kohlenwasserstoffen in einem Abgasstrang einer Verbrennungskraftmaschine, insbesondere einer Verbrennungskraftmaschine in einem Kraftfahrzeug, verwendet werden. Zur Bestimmung des Gehalts an Stickstoffoxiden, Ammoniak und/oder Kohlenwasserstoffen werden zum Beispiel unterschiedliche katalytisch aktive Substanzen für die gassensitive Schicht eingesetzt, so dass die gassensitive Schicht jeweils selektiv auf eines dieser Gase reagiert.

Durch die Ummantelung des Halbleiterbauelementes wird das Halbleiterbauelement zum Beispiel von im Abgas enthaltenen Partikeln, beispielsweise Rußpartikeln, die abrasiv wirken können, geschützt. Auch wird durch die Ummantelung ein Temperaturschutz für das Halbleiterbauelement erzielt.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine schematische Schnittdarstellung eines erfindungsgemäß ausgebildeten Sensorelementes in einer ersten Ausführungsform,
- Figur 2: eine Draufsicht auf ein Sensorelement gemäß Figur 1,

### Ausführungsformen der Erfindung

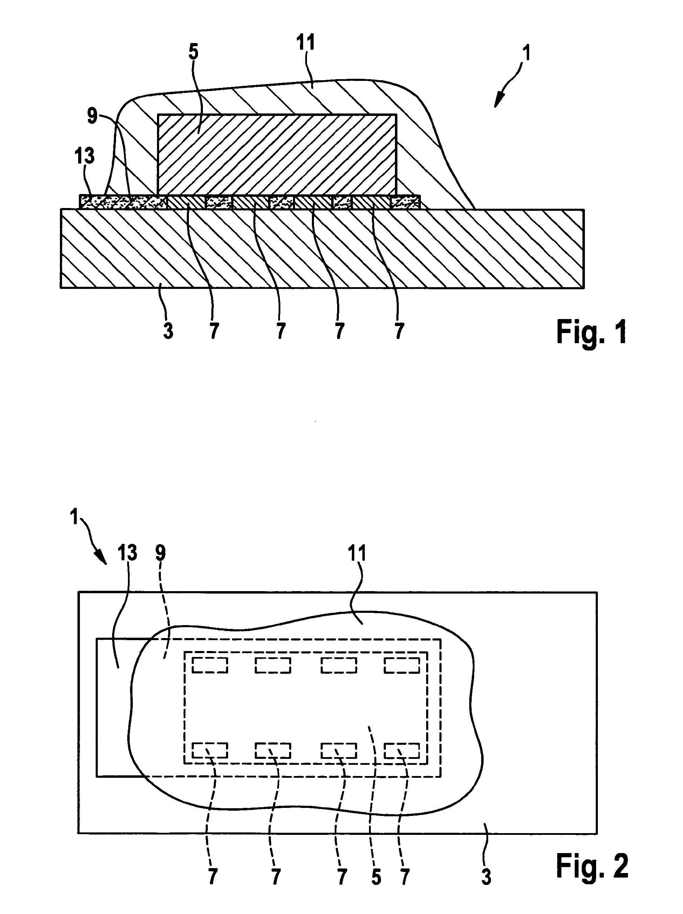

In Figur 1 ist eine Schnittdarstellung eines erfindungsgemäß ausgebildeten Sensorelements in einer ersten Ausführungsform dargestellt.

Ein Sensorelement 1 umfasst einen Träger 3, auf den ein Halbleiterbauelement 5 aufgebracht ist.

Der Träger 3 kann beispielsweise ein Halbleitermaterial umfassen, zum Beispiel einen Halbleiterchip, und kann darüber hinaus beispielsweise elektrische Zuleitungen, Kontaktpads oder ähnliches umfassen. Alternativ kann der Träger 3 jedoch auch zum Beispiel eine Leiterplatte mit entsprechenden darauf aufgebrachten Leiterbahnen sein. Wenn der Träger 3 eine Leiterplatte ist, so eignet sich als Material für den Träger jedes beliebige, dem Fachmann bekannte Material, aus dem üblicherweise Leiterplatten gefertigt werden.

Das Halbleiterbauelement 5 ist mit einem FlipChip-Verfahren auf dem Träger 3 befestigt. Beim FlipChip-Verfahren wird das Halbleiterbauelement mit seiner aktiven Seite zum Träger 3 hin montiert. Die Befestigung des Halbleiterbauelements 5 erfolgt dabei zum Beispiel mit Kontaktpunkten 7, so genannten Kontakt-Bumps, auf dem Träger 3. Das Halbleiterbauelement 5 weist eine gassensitive Schicht auf, mit der zum Beispiel die Anwesenheit bestimmter Gase in der Umgebung detektiert werden kann. Ein geeignetes Halbleiterbauelement 5 ist zum Beispiel ein gassensitiver Feldeffekttransistor.

Im Allgemeinen ist die gassensitive Schicht des Halbleiterbauelements 5 so aufgebaut, dass diese jeweils auf nur ein bestimmtes Gas sensitiv reagiert. Um zum Beispiel unterschiedliche in der Umgebung enthaltene Gase zu detektieren, sind mehrere Halbleiterbauelemente 5 erforderlich. Die Halbleiterbauelemente 5 werden dabei zum Beispiel als Array auf einem Träger 3 angeordnet. Alternativ ist es jedoch auch möglich, für jede zu detektierende Komponente ein unabhängiges Sensorelement 1 vorzusehen, wobei jeweils ein Halbleiterbauelement 5 auf einem Träger 3 positioniert ist.

Durch die Befestigung des Halbleiterbauelements 5 mit dem FlipChip-Verfahren auf dem Träger 3 weist die gassensitive Schicht des Halbleiterbauelements 5 zum Träger 3. Damit das zu untersuchende Gas an die gassensitive Schicht des Halbleiterbauelements 5 gelangen kann, ist es daher notwendig, Mittel zur Gaszufuhr vorzusehen. In der in Figur 1 dargestellten Ausführungsform umfassen die Mittel zur Gaszufuhr eine poröse Schicht 9, die zwischen dem Träger 3 und dem Halbleiterbauelement 5 aufgenommen ist. Die poröse Schicht 9 ist dabei für das zu untersuchende Gas durchlässig. Die Dicke der porösen Schicht 9 lässt sich einerseits zum Beispiel durch ein geeignetes Auftragsverfahren einstellen. Andererseits ist es jedoch auch möglich, dass die Dicke der porösen Schicht 9 durch den Abstand des Halbleiterbauelements 5 vom Träger 3 eingestellt wird. Dieser Abstand ergibt sich zum Beispiel aus der Höhe der Kontaktpunkte 7.

Das Aufbringen der porösen Schicht 9 kann durch jedes beliebige geeignete, dem Fachmann bekannte Verfahren erfolgen. Bevorzugt wird die poröse Schicht 9 durch ein Siebdruckverfahren aufgebracht, bevor das Halbleiterbauelement aufgebracht wird. Die Porosität der Schicht kann dann zum Beispiel durch einen Porenbildner eingesetzt werden. Nach dem Aufbringen der porösen Schicht 9 durch Siebdruck wird die poröse Schicht 9 im Allgemeinen gesintert Als Material für die poröse Schicht 9 werden vorzugsweise Keramiken, beispielsweise Aluminiumoxid, Zirkonoxid, Cordierit oder Mischungen daraus eingesetzt.

Erfindungsgemäß ist das Halbleiterbauelement 5 von einer Ummantelung 11 umschlossen. Die Ummantelung 11 kann porös oder gasdicht ausgeführt sein. Wenn die Ummantelung 11 gasdicht ausgeführt ist, wird die poröse Schicht 9 nicht vollständig von der Ummantelung 11 umschlossen, sondern ein Teil der porösen Schicht 9 ragt zwischen der Ummantelung 11 und dem Träger 3 aus der Ummantelung 11 hervor. Der aus der Ummantelung 11 hervorragende Bereich der porösen Schicht 9 ist mit Bezugszeichen 13 bezeichnet. Über den aus der Ummantelung 11 hervorragenden Bereich 13 der porösen Schicht 9 dringt Gas in die poröse Schicht 9 ein und wird zur gassensitiven Schicht des Halbleiterbauelementes 5 geführt.

Es ist jedoch auch bei einer porösen Ummantelung 11 vorgesehen, dass ein Bereich 13 der porösen Schicht 9 aus der Ummantelung 11 hervorragt.

Durch die Ummantelung 11 wird das Halbleiterbauelement 5 mechanisch geschützt. So erfolgt zum Beispiel ein Schutz gegen abrasive Partikel, die in einem Gas, das dem Sensorelement 1 zugeführt wird, enthalten sein können. Zum anderen bietet die Ummantelung 11 auch Schutz gegen eine Thermoschockbelastung durch Auftreffen kleiner im Gasstrom enthaltener Wassertröpfchen auf geheizte Halbleiterbauelemente 5.

Die Ummantelung 11 wird vorzugsweise durch ein Plasmaspritzverfahren aufgebracht. Durch das Plasmaspritzverfahren lässt sich eine gezielte Schichtdicke der Ummantelung 11 einstellen. Zudem kann auch die Porosität der Ummantelung 11 gezielt eingestellt werden. So ist es zum Beispiel möglich, die Ummantelung 11 porös oder auch gasdicht auszuführen.

Das Material für die Ummantelung 11 ist vorzugsweise Aluminiumoxid, Zirkonoxid, Cordierit, ein Glas oder eine Mischung daraus.

Wenn die Ummantelung 11 porös ausgeführt ist und eine poröse Schicht 9 vorgesehen ist, so können die Ummantelung 11 und die poröse Schicht 9 aus dem gleichen Material oder aus unterschiedlichen Materialen hergestellt werden. Bevorzugt ist es jedoch, wenn die Ummantelung 11 und die poröse Schicht 9 aus dem gleichen Material gefertigt werden. Neben dem ausgewählten Material ist es weiterhin auch möglich, dass sich die Porosität der Ummantelung 11 und der porösen Schicht 9 unterscheidet. So ist es zum Beispiel möglich, dass die poröse Schicht 9 stärker porös ist als die Ummantelung 11. Alternativ ist es auch möglich, dass die Ummantelung 11 eine stärkere Porosität aufweist als die poröse Schicht 9. Neben einer unterschiedlichen Porosität der Ummantelung 11 und der porösen Schicht 9 ist es jedoch auch möglich, dass die Ummantelung 11 und die poröse Schicht 9 die gleiche Porosität aufweisen.

Aufgrund der Montage des Halbleiterbauelementes 5 mit einem FlipChip-Verfahren wird die gassensitive Schicht des Halbleiterbauelementes 5 beim Aufbringen der Ummantelung 11 geschützt, da das Material der Ummantelung 11 nicht auf die gassensitive Schicht auftreffen kann. Dadurch wird einer Zerstörung der gegebenenfalls empfindlichen Gate-Strukturen eines gassensitiven Feldeffekttransistors vorgebeugt.

In Figur 2 ist eine Draufsicht auf ein Sensorelement gemäß Figur 1 dargestellt.

Wie der Darstellung gemäß Figur 2 entnehmbar ist, ragt die poröse Schicht 9 auf allen Seiten aus dem Halbleiterbauelement 5 hervor. Die poröse Schicht 9 dient dabei als Schutz der Unterseite des Halbleiterbauelementes 5. Dadurch, dass die poröse Schicht 9 größer ist als das Halbleiterbauelement 5, liegt kein Bereich der Unterseite des Halbleiterbauelements 5 frei.

In der hier dargestellten Ausführungsform ragt die poröse Schicht 9 einseitig unter der Ummantelung 11 hervor. Der aus der Ummantelung 11 hervorragende Bereich 13 der porösen Schicht 9 kann jedoch auch auf allen Seiten unter der Ummantelung 11 hervorragen. In diesem Fall liegt die Ummantelung 11 vollständig auf der porösen Schicht 9 auf. Wenn eine Durchtrittsöffnung 15 oder ein Kanal im Träger 3 ausgebildet werden, so ist darauf zu achten, dass keine Feuchtigkeit in diese eindringen kann, da Feuchtigkeit zu einer Schädigung des Halbleiterbauelements 5 führen kann.

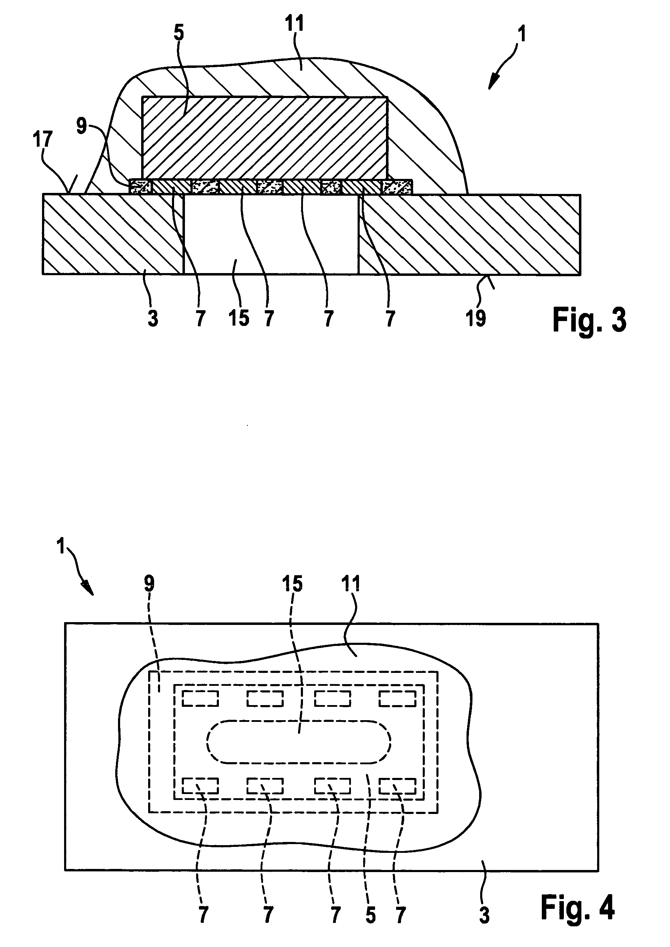

In Figur 4 ist eine Draufsicht auf ein Sensorelement 1 gemäß Figur 3 dargestellt. In der hier dargestellten Ausführungsform ist zu erkennen, dass die Durchtrittsöffnung 15 in Form eines Langloches ausgebildet ist. Durch diese Form ist ein möglichst großer Bereich der gassensitiven Schicht des Halbleiterbauelements 5 zum Gas hin offen. Neben der Ausführung als Langloch, wie es in Figur 4 dargestellt ist, kann die Durchtrittsöffnung 15 auch jede beliebige andere Form aufweisen. Auch ist es möglich, dass anstelle nur einer Durchtrittsöffnung 15 mehrere Durchtrittsöffnungen vorgesehen sind. Diese können zum Beispiel als Bohrungen ausgeführt sein. Auch jeder beliebige andere Querschnitt der Durchtrittsöffnung 15 ist denkbar.

## Patentansprüche

1. Sensorelement, umfassend mindestens ein Halbleiterbauelement (5) mit einer gassensitiven Schicht, das nach dem FlipChip-Verfahren auf einem Träger (3) befestigt ist, wobei die gassensitive Schicht in Richtung des Trägers (3) weist und Mittel umfasst sind, um der gassensitiven Schicht ein zu untersuchendes Gas zuzuführen, **dadurch gekennzeichnet, dass** das Halbleiterbauelement (5) von einer Ummantelung (11) umschlossen ist und, dass die Mittel für die Gaszufuhr eine poröse Schicht (9) umfassen, die zwischen dem Halbleiterbauelement (5) und dem Träger (3) angeordnet ist, wobei ein Bereich (13) der porösen Schicht (9) nicht von der Ummantelung (11) abgedeckt ist.

2. Sensorelement gemäß Anspruch 1, **dadurch gekennzeichnet, dass** die poröse Schicht (9) mindestens eine offen poröse Keramik enthält.

3. Sensorelement nach einem der vorhergehenden Ansprüche, **dadurch gekennzeichnet, dass** die Ummantelung (11) gasdicht ausgeführt ist.

4. Sensorelement nach einem der vorhergehenden Ansprüche, **dadurch gekennzeichnet dass** die Ummantelung (11) mindestens ein Material aus der Gruppe bestehend aus Aluminiumoxid, Zirkonoxid, Cordierit und Gläser enthält.

5. Sensorelement nach einem der vorhergehenden Ansprüche, **dadurch gekennzeichnet, dass** das Halbleiterbauelement (5) mit der gassensitiven Schicht ein chemosensitiver Feldeffekttransistor ist.

6. Verwendung eines Sensorelements (1) nach einem der vorhergehenden Ansprüche zur Bestimmung des Gehalts an Stickstoffoxiden, Ammoniak und/oder Kohlenwasserstoffen in einem Abgasstrang einer Verbrennungskraftmaschine, insbesondere einer Verbrennungskraftmaschine in einem Kraftfahrzeug.

## Claims

1. Sensor element, comprising at least one semiconductor component (5) having a gas-sensitive layer, which is fastened to a substrate (3) by the flip-chip method, wherein the gas-sensitive layer points in the direction of the substrate (3) and means are present in order to supply a gas to be examined to the gas-sensitive layer, **characterized in that** the semiconductor component (5) is enclosed by a casing (11), and **in that** the means for the gas supply comprise a porous layer (9), which is arranged between the semiconductor component (5) and the substrate (3), wherein a region (13) of the porous layer (9) is not covered by the casing (11).

2. Sensor element according to Claim 1, **characterized in that** the porous layer (9) contains at least one porous ceramic with open pores.

3. Sensor element according to either of the preceding claims, **characterized in that** the casing (11) has a gas-tight configuration.

4. Sensor element according to one of the preceding claims, **characterized in that** the casing (11) contains at least one material from the group consisting of aluminium oxide, zirconium oxide, cordierite and glasses.

5. Sensor element according to one of the preceding claims, **characterized in that** the semiconductor component (5) with the gas-sensitive layer is a chemosensitive field-effect transistor.

6. Use of a sensor element (1) according to one of the preceding claims for determining the content of nitrogen oxides, ammonia and/or hydrocarbons in an exhaust system of an internal combustion engine, in particular an internal combustion engine in a motor vehicle.

## Revendications

1. Élément détecteur, comprenant au moins un composant semi-conducteur (5) avec une couche sensible aux gaz, lequel composant semi-conducteur est fixé sur un support (3) selon le procédé FlipChip, la couche sensible aux gaz étant tournée dans la direction du support (3) et des moyens étant prévus pour acheminer un gaz à détecter à la couche sensible aux gaz, **caractérisé en ce que** le composant semi-conducteur (5) est entouré par une enveloppe (11), **en ce que** les moyens pour acheminer le gaz comprennent une couche poreuse (9), qui est disposée entre le composant semi-conducteur (5) et le support (3), une région (13) de la couche poreuse (9) n'étant pas couverte par l'enveloppe (11).

2. Élément détecteur selon la revendication 1, **caractérisé en ce que** la couche poreuse (9) contient au moins une céramique poreuse ouverte.

3. Élément détecteur selon l'une quelconque des revendications précédentes, **caractérisé en ce que** l'enveloppe (11) est réalisée sous forme étanche aux gaz.

4. Élément détecteur selon l'une quelconque des revendications précédentes, **caractérisé en ce que** l'enveloppe (11) contient au moins un matériau parmi le groupe constitué de l'oxyde d'aluminium, de l'oxyde de zirconium, de la cordiérite, et de verres.

5. Élément détecteur selon l'une quelconque des revendications précédentes, **caractérisé en ce que** le composant semi-conducteur (5) avec la couche sensible aux gaz est un transistor à effet de champ chimiosensible.

6. Utilisation d'un élément détecteur (1) selon l'une quelconque des revendications précédentes, pour déterminer la teneur en oxydes d'azote, en ammoniac et/ou en hydrocarbures dans un système d'échappement d'un moteur à combustion interne, en particulier d'un moteur à combustion interne d'un véhicule automobile.
